# FASCICULE DE BREVET EUROPEEN

(11) **EP 0 659 518 B1**
(45) Date de publication et mention de la délivrance du brevet: **22.04.1998**
(21) Numéro de dépôt: 94402816.6
(22) Date de dépôt: 07.12.1994
(51) Int. Cl.: B23K 26/00

(54) **Installation de raboutage et de soudage au moyen d'un faisceau laser de deux bobines de bandes métalliques pour former une bande métallique continue**
Anlage zum Aneinanderfügen und zum Schweissen von zwei aufgewickelten Metallbänder mittels eines Laserstrahls um ein kontinuierliches Metallband herzustellen
Installation for butt-joining and welding of two metal sheet coils using a laser beam in order to form a continuous metallic strip

(30) Priorité: 21.12.1993 FR 9315384
(43) Date de publication de la demande: 28.06.1995
(73) Titulaire: SOLLAC, 92800 Puteaux (FR)
(72) Inventeur: Peru, Gilles, 59240 Dunkerque (FR); Sauvage, Francis, 59240 Dunkerque (FR)
(74) Mandataire: Lanceplaine, Jean-Claude

(56) Documents cités:
- EP-A- 0 151 848
- EP-A- 0 438 609
- EP-A- 0 494 345
- US-A- 4 854 493

## Description

La présente invention a pour objet une installation de raboutage et de soudage au moyen d'un faisceau laser de deux bobines de bandes métalliques pour former une bande métallique continue.

Dans les procédés sidérurgiques, il est connu, après avoir laminé à froid des bandes issues d'un train à chaud pour en diminuer l'épaisseur, de faire subir à ces bandes laminées à froid des traitements post-laminage tels que par exemple un recuit d'homogénéisation ou de décapage ou encore de revêtement.

Pour cela, les traitements étant réalisés en continu au défilement, il est nécessaire par souci de productivité de dérouler les bobines de bandes et de rabouter lesdites bandes les unes derrière les autres afin d'obtenir une bande continue.

A cet effet, on place en recouvrement la queue d'une première bobine et la tête d'une seconde bobine à rabouter sur la première, on bride chaque bande de part et d'autre de l'interface en recouvrement et on soude l'interface en recouvrement par passage sous effort de molettes conductrices entre lesquelles circule un courant électrique de soudage.

Pendant cette opération, la queue de la première bande arrête de défiler vers l'installation de traitement située en aval.

Cette opération est rendue possible sans arrêter le défilement de la bande dans l'installation de traitement par interposition entre ladite installation de traitement et l'installation de soudage, d'un accumulateur de bandes qui se vide pendant l'arrêt de la queue de la première bobine et se remplit dès que l'opération de raboutage est terminée et que la bande de la seconde bobine avance.

Le problème du raboutage des bandes réside principalement dans le fait que l'opération de soudage entraîne un recuit local et une surépaisseur de la bande au niveau de l'interface en recouvrement.

Ce recuit entraîne une structure recristallisée de la zone soudée.

Or, les bandes étant initialement laminées à froid, elles sont fortement écrouies avec une structure lamellaire orientée dans le sens du laminage.

La structure métallographique de la bande continue issue du raboutage de deux bobines est donc hétérogène, une petite zone recuite et recristallisée étant entourée de deux zones fortement écrouies.

Ainsi, il en découle un profil de caractéristiques mécaniques hétérogènes, la limite élastique et la charge à la rupture étant supérieures dans la zone soudée que dans le reste de la bande et, par voie de conséquence, une chute de la dureté dans la zone soudée.

De ce fait, lorsque l'on tire sur une telle bande au cours du traitement que l'on souhaite lui faire subir, on assiste très souvent à une casse nette au niveau de la jonction entre les deux zones.

Pour éviter ce type de problèmes, il est nécessaire de réaliser un recuit d'homogénéisation de la bande avant soudage.

Mais, ce type de recuit n'est pas forcément souhaitable en particulier si on désire conserver la structure écrouie de la bande.

Outre, ces problèmes d'ordre métallurgique, la zone soudée présente une surépaisseur de l'ordre de 30 à 50% par rapport à l'épaisseur initiale des bandes.

Cette surépaisseur s'avère préjudiciable lors du bobinage de la bande continue, car au moment de la formation des spires, en raison de la surépaisseur de la soudure, la bobine présente un défaut de circularité qui entraîne un marquage de la bande conduisant celle-ci au rebut.

Pour minimiser cet effet de marquage de la bande, il est connu de disposer après les molettes de l'installation de soudage, au droit de l'interface de recouvrement, un galet de forgeage pour écraser la soudure peu après sa formation lorsque le métal est encore malléable.

Cette opération de galetage transversale permet de répartir la surépaisseur de la soudure et ainsi de réduire de 5 à 20% de l'épaisseur de la tôle, mais sans l'éliminer totalement.

Du point de vue métallurgique, l'opération de galetage écrouit légèrement le métal au droit de la zone soudée et permet de minimiser sensiblement le phénomène d'hétérogénéité de la structure de la bande continue, mais le problème posé reste entier.

Le soudage de la queue de la première bobine avec la tête de la seconde bobine peut également être réalisé par étincelage.

Mais, le soudage par étincelage entraîne également au niveau du plan de joint des surépaisseurs de métal qu'il est nécessaire de meuler avant de faire subir à la bande continue les traitements ultérieurs et avant d'enrouler cette bande continue sous la forme d'une bobine.

EP-A1-0 438 609 décrit une installation de raboutage conforme au préambule de la revendication 1.

La présente invention a pour but d'éviter ces inconvénients en proposant une installation de raboutage et de soudage au moyen d'un faisceau laser de deux bobines de bandes métalliques, qui permet d'obtenir une zone soudée ne présentant aucune surépaisseur par rapport à l'épaisseur initiale de la bande et d'obtenir une bande continue ne présentant pas d'hétérogénéité de structure de façon à éliminer les risques de rupture de ladite bande lors des traitements ultérieurs.

L'invention a donc pour objet une installation de raboutage et de soudage au moyen d'un faisceau laser de deux bobines de bandes métalliques pour former une bande métallique continue, caractérisée en ce qu'elle comprend :
- des moyens de déroulement et d'enroulement des bobines,
- un système accumulateur de la bande de la première bobine,
- des moyens de détection de la queue de la première bobine et de la tête de la deuxième bobine,
- des moyens de cisaillage de la queue de la première bobine et de la tête de la deuxième bobine,
- des moyens de guidage et de support des bandes métalliques des bobines,
- un ensemble de positionnement et de maintien des bords à souder de la queue de la première bobine et de la tête de la deuxième bobine les uns contre les autres et dans l'axe du faisceau laser, comportant
   - des moyens de positionnement de la queue de la première bobine selon un plan de référence horizontal,
   - des moyens de maintien du bord à souder de la queue de la première bobine dans l'axe du faisceau laser,
   - des moyens de serrage de la queue de la première bobine,
   - des moyens de positionnement de la tête de la deuxième bobine selon ledit plan horizontal,
   - des moyens de maintien du bord à souder de la tête de la deuxième bobine contre le bord à souder de la queue de la première bobine et,
   - des moyens de serrage de la tête de la deuxième bobine
- et un ensemble de soudage par faisceau laser déplaçable selon le plan de joint formé par les bords à souder desdites bobines, caractérisée en ce que l'ensemble de positionnement et de maintien des bords à souder comprend également :
- des moyens de positionnement du bord à souder de la queue de la première bobine dans l'axe du faisceau laser,
- et des moyens de mise en pression latérale des bords à souder des bandes des deux bobines.

Les caractéristiques et avantages de l'invention apparaîtront au cours de la description qui va suivre, donnée à titre d'exemple et faite en référence aux dessins annexés, sur lesquels :
- la Fig. 1 est une vue schématique d'une installation, selon l'invention, de raboutage et de soudage au moyen d'un faisceau laser de deux bobines de bandes métalliques,
- la Fig. 2 est une vue schématique en coupe transversale, à plus grande échelle, de l'ensemble de positionnement et de maintien des bords à souder des deux bobines, dans laquelle les moyens de serrage sont en position relevée,

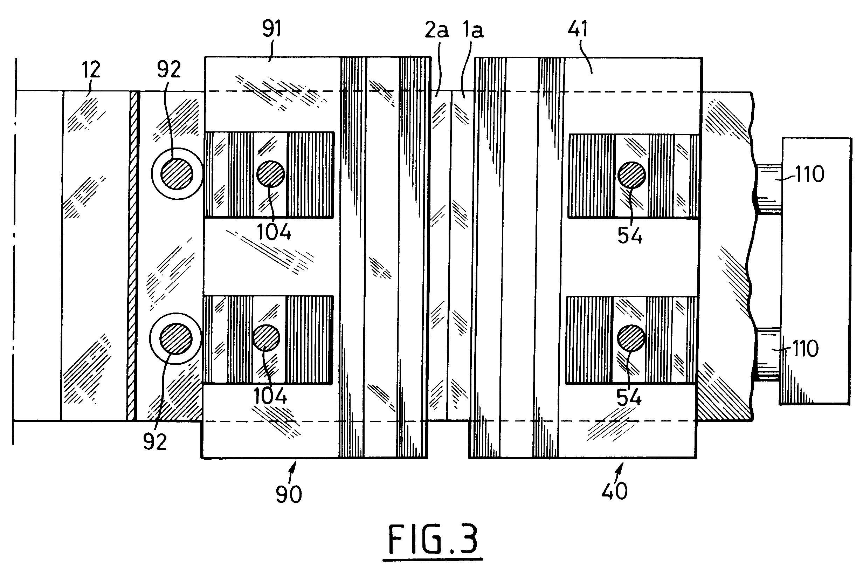

- la Fig. 3 est une vue schématique en coupe selon la ligne 3-3 de la Fig. 2,
- la Fig. 4 est une vue schématique en coupe transversale, à plus grande échelle, de l'ensemble de positionnement et de maintien des bords à souder des deux bobines, dans laquelle les moyens de serrage sont en position fermée,
- les Figs. 5 à 8 sont des vues schématiques montrant les différentes étapes de raboutage et de soudage des bords à souder des deux bobines.

Après l'opération de laminage à froid, les bandes métalliques sont enroulées sous la forme de bobines et ces bobines sont raboutées et soudées deux à deux dans une installation selon l'invention.

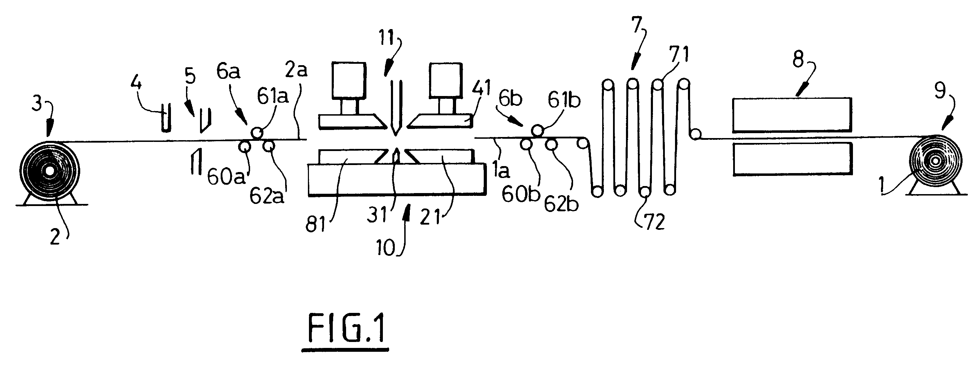

Dans l'exemple de réalisation décrit ci-après, l'installation selon l'invention destinée au raboutage et au soudage au moyen d'un faisceau de laser de deux bobines 1 et 2 de bandes métalliques comprend, par rapport au sens de défilement des bandes des deux bobines 1 et 2 et comme représenté à la Fig. 1 :
- des moyens 3 de déroulement successivement des bandes des deux bobines,
- des moyens 4 de détection de la queue 1a de la première bobine 1 et de la tête 2a de la deuxième bobine 2,
- des moyens 5 de cisaillage de la queue 1a de la première bobine 1 et de la tête 2a de la deuxième bobine 2,
- un premier moyen 6a de guidage et de support des bandes métalliques des bobines 1 et 2,
- un ensemble 10 de positionnement et de maintien des bords à souder de la queue 1a de la première bobine 1 et de la tête 2a de la deuxième bobine 2 les uns contre les autres et dans l'axe d'un faisceau laser,
- un ensemble de soudage 11 par faisceau laser déplaçable selon le plan de joint formé par les bords à souder des bobines 1 et 2,
- un second moyen 6b de guidage et de support des bandes métalliques des bobines 1 et 2,
- un système accumulateur 7 de la bande de la première bobine 1,
- un ou plusieurs poste 8 de traitement des bandes des bobines 1 et 2, pour réaliser par exemple un recuit d'homogénéisation ou un décapage ou un revêtement,
- et enfin des moyens 9 d'enroulement de la bande de la première bobine 1.

Les moyens 5 de cisaillage sont formés par une cisaille classique commandée par les moyens 4 de détection et destinée à couper successivement la queue 1a de la première bobine 1 et la tête 2a de la deuxième bobine 2.

Selon une variante, les moyens 5 de cisaillage peuvent être formés par deux cisailles commandées par des moyens de détection, d'une part, de la queue 1a de la première bobine 1 et, d'autre part, de la tête 2a de la deuxième bobine 2.

Dans ce cas, une première cisaille est disposée, par rapport au sens de défilement des bandes métalliques, en amont de l'ensemble 10 de positionnement et de maintien des bords à souder et est destinée à couper la tête 2a de la deuxième bobine 2 et une seconde cisaille est disposée en aval de l'ensemble 10 de positionnement et de maintien des bords à souder et est destinée à couper la queue 1a de la première bobine 1.

Les moyens de détection 4 sont constitués par exemple par au moins une cellule photo-électrique.

Le premier moyen 6a de guidage et de support des bandes métalliques est formé par au moins une série de rouleaux horizontaux comprenant chacune deux rouleaux inférieurs 60a, 62a et un rouleau supérieur 61a entre lesquels circulent les bandes métalliques.

Le rouleau supérieur 61a est disposé entre les rouleaux inférieurs, respectivement 60a et 62a, et les trois rouleaux 60a, 61a et 62a sont déplaçables simultanément verticalement par des moyens appropriés non représentés.

Le second moyen 6b de guidage et de support des bandes métalliques est également formé par au moins une série de rouleaux horizontaux comprenant chacune deux rouleaux inférieurs 60b et 62b et un rouleau supérieur 61b.

Le rouleau supérieur 61b est disposé entre les rouleaux inférieurs 60b et 62b et les trois rouleaux 60b, 61b et 62b sont déplaçables verticalement.

Selon un premier mode de réalisation, les rouleaux 60b, 61b et 62b sont déplaçables horizontalement dans la direction opposée au sens de défilement des bandes métalliques.

Selon un second mode de réalisation, les rouleaux 60b, 61b et 62b peuvent être entraînés en sens inverse par rapport au sens de défilement des bandes métalliques.

De manière classique, le système accumulateur 7 de la bande de la première bobine 1 comporte une pluralité de rouleaux 71 mobiles verticalement et une pluralité de rouleaux fixes 72.

La bande entre dans le système accumulateur par une extrémité, s'enroule alternativement autour des rouleaux 71 et 72 et ressort dudit système accumulateur par l'autre extrémité.

Quand la bande se déplace à l'amont de l'accumulateur plus vite qu'a l'aval, la longueur de bande à l'intérieur de l'accumulateur augmente, les rouleaux mobiles 71 s'écartent alors des rouleaux fixes 72, ce qui permet de maintenir la bande bien tendue.

Inversement, lorsque la bande se déplace à l'amont de l'accumulateur moins vite qu'à l'aval, la longueur de bande dans l'accumulateur diminue et les rouleaux mobiles 71 se rapprochent des rouleaux fixes 72 sans que des tensions importantes apparaissent dans ladite bande.

L'ensemble 10 de positionnement et de maintien des bords à souder de la queue 1a de la première bobine 1 et de la tête 2a de la deuxième bobine 2 les uns contre les autres et dans l'axe du faisceau laser 11 comprend :
- des moyens 12 de guidage des bandes métalliques à l'entrée dudit ensemble,
- des moyens 20 de positionnement de la queue 1a de la première bobine 1 selon un plan de référence horizontal,
- des moyens 30 de positionnement du bord à souder de la queue 1a de la première bobine 1 dans l'axe du faisceau laser 11,
- des moyens 40 de maintien du bord à souder de la queue 1a de la première bobine 1 dans l'axe du faisceau laser 11,
- des moyens 50 de serrage de la queue 1a de la première bobine 1,
- des moyens 80 de positionnement de la tête 2a de la deuxième bobine 2 selon ledit plan de référence horizontal,
- des moyens 90 de maintien du bord à souder de la tête 2a de la deuxième bobine 2 contre le bord à souder de la queue 1a de la première bobine 1,
- des moyens 100 de serrage de la tête 2a de la deuxième bobine 2,
- et des moyens, respectivement 110 et 120, de mise en pression latérale des bords à souder des bandes des deux bobines 1 et 2.

Les moyens 20 de positionnement de la queue 1a de la première bobine 1 sont formés par au moins un patin inférieur 21 s'étendant parallèlement au plan de joint des bords à souder de la queue 1a de la première bobine 1 et de la tête 2a de la deuxième bobine 2.

Ce patin inférieur 21 forme une surface de contact continu avec la face inférieure de la queue 1a de la première bobine 1 et est monté déplaçable sur une table support 22, perpendiculairement au plan de joint desdits bords à souder.

Ce patin inférieur 21 comporte deux pions 23 en saillie par rapport à sa surface inférieure.

Chaque pion 23 pénètre dans une lumière 24 ménagée dans la table support 22 de façon à assurer le guidage du patin inférieur 21 lors de son déplacement transversal par rapport au plan de joint des bords à souder.

Les moyens 30 de positionnement du bord à souder de la queue 1a de la première bobine 1 sont formés par une butée 31 longitudinale et escamotable.

A cet effet, la butée 31 est reliée à un mécanisme 32 de déplacement vertical de ladite butée 31 et est disposée verticalement pour que le plan de joint passant par sa face latérale située en regard du patin inférieur 20 soit confondu avec l'axe du faisceau laser 11.

Le mécanisme 32 de déplacement vertical de la butée 31 peut être constitué par un mécanisme à excentrique ou par des vérins à double effet.

Les moyens 40 de maintien du bord à souder de la queue 1a de la première bobine 1 dans l'axe du faisceau laser 11 sont formés par au moins un patin supérieur 41 déplaçable verticalement et s'étendant parallèlement au plan de joint des bords à souder.

Ce patin supérieur 41 forme une surface de contact continu avec la face supérieure de la queue 1a de la première bobine 1 et est disposé en regard du patin inférieur 20.

Le patin inférieur 20 et/ou le patin supérieur 41 peuvent être remplacés par plusieurs patins juxtaposés formant des surfaces sensiblement continues de contact avec la queue 1a de la première bobine 1.

Les moyens 50 de serrage de la queue 1a de la première bobine 1 sont formés par au moins un vérin 51 destiné à exercer sur le patin supérieur 41 une pression verticale pour serrer ladite queue 1a de la première bobine 1 entre ce patin supérieur 41 et le patin inférieur 21.

Le vérin 51 comporte un corps 52 supporté par une poutre 53 s'étendant parallèlement au patin supérieur 41 et une tige 54 déplaçable verticalement et solidaire dudit patin supérieur 41.

L'ensemble constitué par le patin supérieur 41, le vérin 51 et la poutre 53 est déplaçable verticalement pour soulever ledit patin supérieur 41 et ménager un espace suffisant entre le patin supérieur 41 et le patin inférieur 21 pour le passage des bandes des bobines 1 et 2.

Le déplacement vertical de cet ensemble est assuré par des organes appropriés non représentés, comme par exemple par un système à crémaillère ou un vérin.

Les moyens 80 de positionnement de la tête 2a de la deuxième bobine 2 sont formés par au moins un patin inférieur 81 fixe, en appui sur une table support 82, et s'étendant parallèlement au plan de joint des bords à souder.

Le patin inférieur 81 forme une surface de contact continu avec la face inférieure de la tête 2a de la deuxième bobine 2.

Le patin inférieur 81 est en appui par sa face latérale 81a opposée à celle en regard du plan de joint des bords à souder, sur au moins un organe de butée 83 solidaire de la table support 82.

Les moyens 90 de maintien du bord à souder de la tête 2a de la deuxième bobine 2 contre le bord à souder de la queue 1a de la première bobine 1 sont formés par au moins un patin supérieur 91 s'étendant parallèlement au plan de joint des bords à souder.

Ce patin supérieur 91 forme une surface de contact continu avec la face supérieure de la tête 2a de la deuxième bobine 2 et est disposé en regard du patin inférieur 81.

Le patin inférieur 81 et le patin supérieur 91 peuvent être remplacés par plusieurs patins juxtaposés formant des surfaces sensiblement continues de contact avec la tête 2a de la deuxième bobine 2.

Les moyens 100 de serrage de la tête 2a de la deuxième bobine 2 sont formés par au moins un vérin 101 destiné à exercer sur la patin supérieur 91 une pression verticale pour serrer ladite tête 2a de la deuxième bobine 2 entre ce patin supérieur 91 et le patin inférieur 81.

Le vérin 101 comporte un corps 102 supporté par une poutre 103 s'étendant parallèlement au patin supérieur 91 et une tige 104 déplaçable verticalement et solidaire dudit patin supérieur 91.

L'ensemble constitué par le patin supérieur 91, le vérin 101 et la poutre 103 est déplaçable verticalement d'une hauteur suffisante pour soulever le patin supérieur 91 et ménager entre ce patin supérieur 91 et le patin inférieur 81 un espace permettant le passage des bandes.

Le déplacement vertical de cet ensemble est assuré par exemple par un mécanisme à crémaillère ou un vérin ou tout autre mécanisme approprié.

Le patin supérieur 91 est en appui par sa face latérale 91a opposée à celle en regard du plan de joint des bords à souder, sur au moins un organe de butée 92 solidaire de la poutre 103.

Les organes de butée 83 et 92 évitent le glissement, respectivement du patin inférieur 81 et du patin supérieur 91, lorsqu'une pression latérale est exercée sur les bords à souder de la queue 1a de la première bobine 1 et de la tête 2a de la deuxième bobine 2, comme on le verra ultérieurement.

Les moyens 110 et 120 de mise en pression latérale des bords à souder des deux bobines 1 et 2 sont formés, d'une part, par au moins un premier vérin 111 associé au patin inférieur 21 et, d'autre part, par au moins un second vérin 121 associé au patin supérieur 41.

Le vérin 111 comporte une tige 112 déplaçable horizontalement et reliée au patin inférieur 21 par au moins un pion 113 qui traverse la table support 22.

Dans l'exemple représenté sur les figures, deux vérins 111 sont associés au patin inférieur 21.

Le vérin 121 est supporté par la poutre 53 et comporte une tige 122 déplaçable horizontalement qui agit sur le patin supérieur 41 par l'intermédiaire du corps 52 et de la tige 54 du vérin 51.

Dans l'exemple représenté sur les figures, deux vérins 121 sont associés au patin supérieur 41.

Les vérins 111 et 121 sont commandés en synchronisation et sont destinés à exercer sur, respectivement le patin inférieur 21 et le patin supérieur 41, une pression déterminée et dirigée selon une direction perpendiculaire au plan de joint des bords à souder.

L'installation selon l'invention fonctionne de la manière suivante.

Tout d'abord, la première bobine est placée sur les moyens de déroulement 3 et la bande est déroulée.

Cette bande passe dans des moyens de ci-saillage 5 entre les rouleaux 60a, 60b et 60c, dans l'ensemble 10 de positionnement et de maintien des bords à souder, entre les rouleaux 60b, 61b et 62b, dans le système d'accumulation 7, dans le poste de traitement 8 et est enfin enroulée sous la forme d'une bobine 1 par le dispositif d'enroulement 9.

Successivement au déroulement de la première bobine, une seconde bobine 2 est déroulée et suit le même parcours.

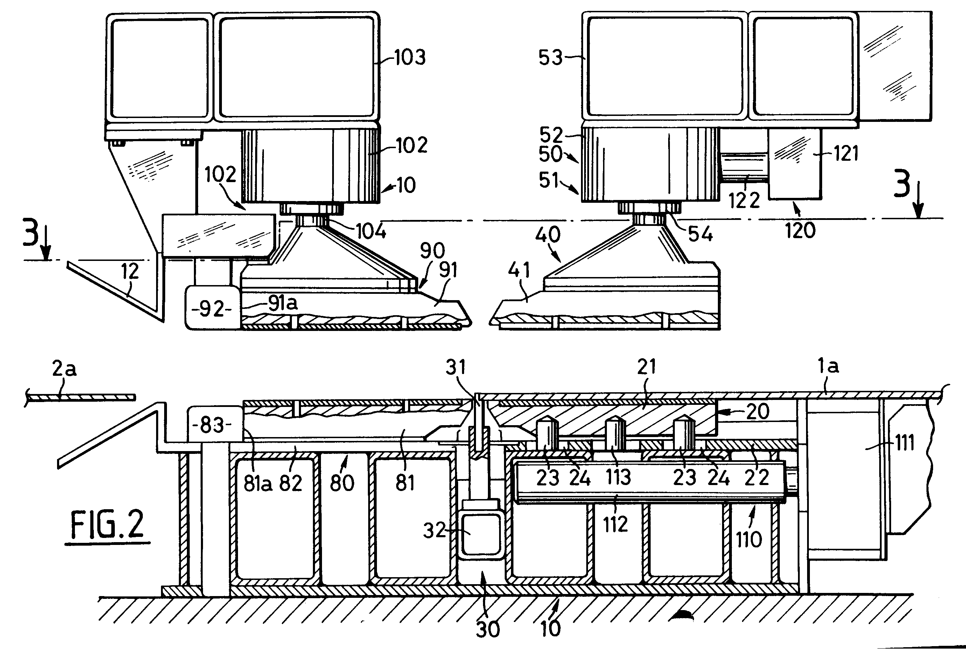

Pour permettre le passage des bandes dans l'ensemble 10 de positionnement et de maintien des bords à souder, l'opérateur a placé les moyens de guidage 6a et 6b en position haute et a relevé les patins supérieurs 41 et 91, comme représenté sur les Figs. 1 et 2.

Lors du défilement de la bande de la première bobine 1, les moyens de détection 4 détectent la queue la de la bande de cette première bobine 1 ce qui provoque l'arrêt du défilement de la portion de la bande située entre les moyens de cisaillage 5 et le système d'accumulation 7, la portion de la bande située en aval de ce système d'accumulation 7 continuant à se déplacer normalement en utilisant la longueur de la bande accumulée dans ledit système d'accumulation.

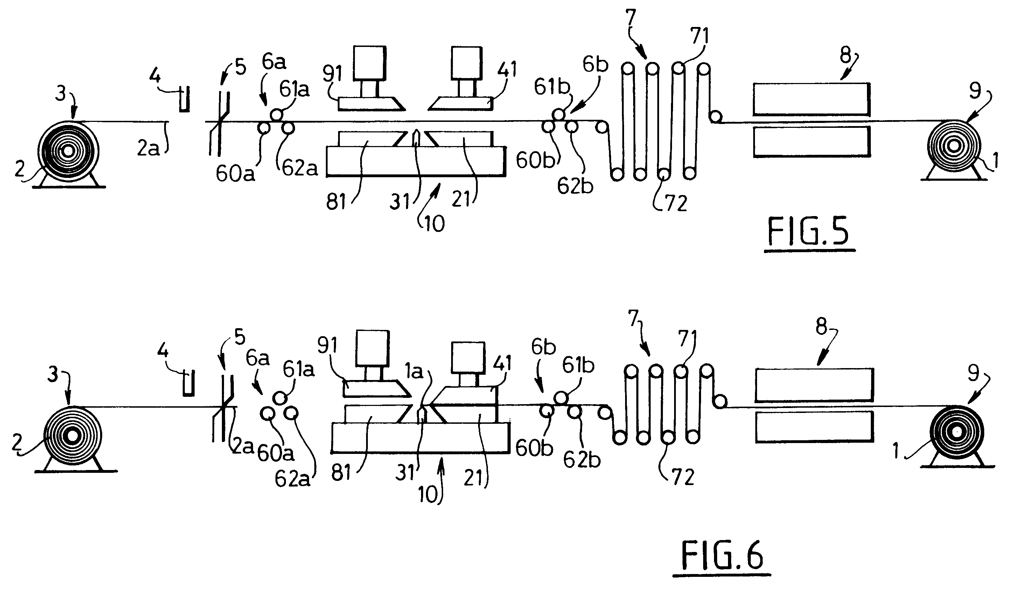

Les moyens de détection 4 commandent les moyens 5 de cisaillage ce qui a pour effet de couper la queue 2a de la première bobine 2, comme représenté à la Fig. 5.

Ensuite, la portion de la bande de la première bobine 1 située en amont du système accumulateur 7 avance de nouveau et l'opérateur commande la montée de la butée escamotable 31.

Après cette séquence, l'opérateur commande la descente des moyens 6b de guidage et de support de la queue 1a de la première bobine 1, ainsi que le déplacement de ces moyens de guidage et de support dans la direction opposée au sens de défilement de la bande de la première bobine 1 pour que le bord à souder de la queue 1a de cette première bobine 1 vienne s'appliquer sur la butée 31 afin de positionner ledit bord à souder dans l'axe du faisceau laser 11.

Selon une variante, les moyens 6b de guidage et de support de la queue 1a de la première bobine peuvent être entraînés en sens inverse pour que le bord à souder de la queue 1a de cette première bobine 1 vienne s'appliquer sur la butée 31.

L'opérateur commande également la descente de l'ensemble constitué par le patin supérieur 41, le vérin 51 et la poutre 53 pour serrer la queue 1a de la première bobine 1 entre le patin inférieur 21 et le patin supérieur 41 et maintenir le bord à souder de la queue 1a de ladite première bobine 1 dans l'axe du faisceau laser 11, comme représenté à la Fig. 6.

Simultanément, les moyens 4 de détection détectent la tête 2a de la deuxième bobine 2 et commande l'arrêt de la bande de cette deuxième bobine 2 et les moyens de cisaillage 5 pour couper la tête 2a de ladite deuxième bobine 2.

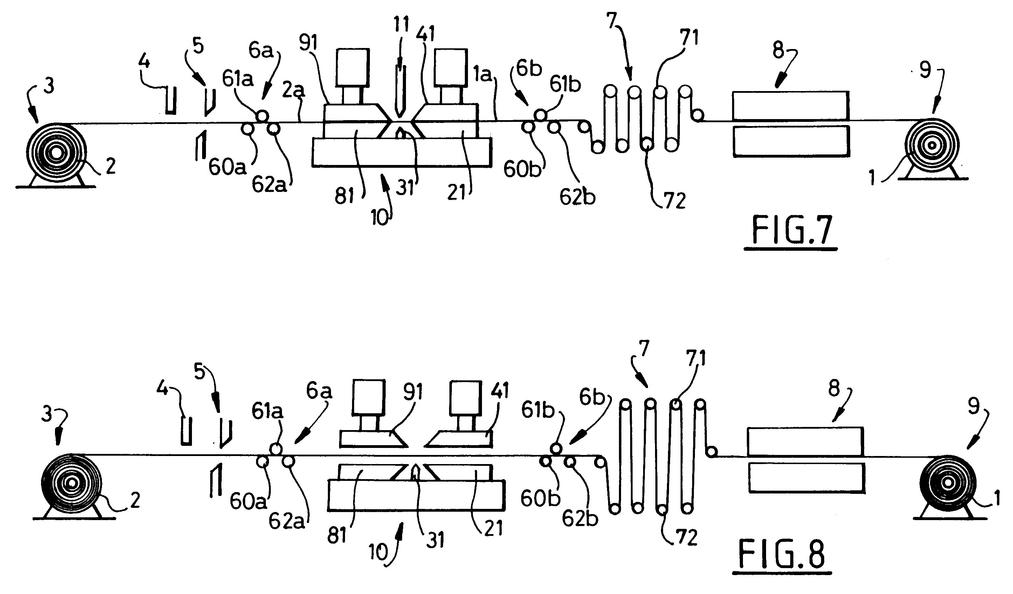

Après passage de la tête 2a de la deuxième bobine 2 dans les moyens 6a de guidage et de support, l'opérateur commande la descente de ces moyens 6a de guidage et de support pour amener le bord à souder de la tête 2a de la deuxième bobine 2 contre le bord à souder de la queue 1a de la première bobine 1, après avoir escamoté la butée 31, comme représenté à la Fig. 7.

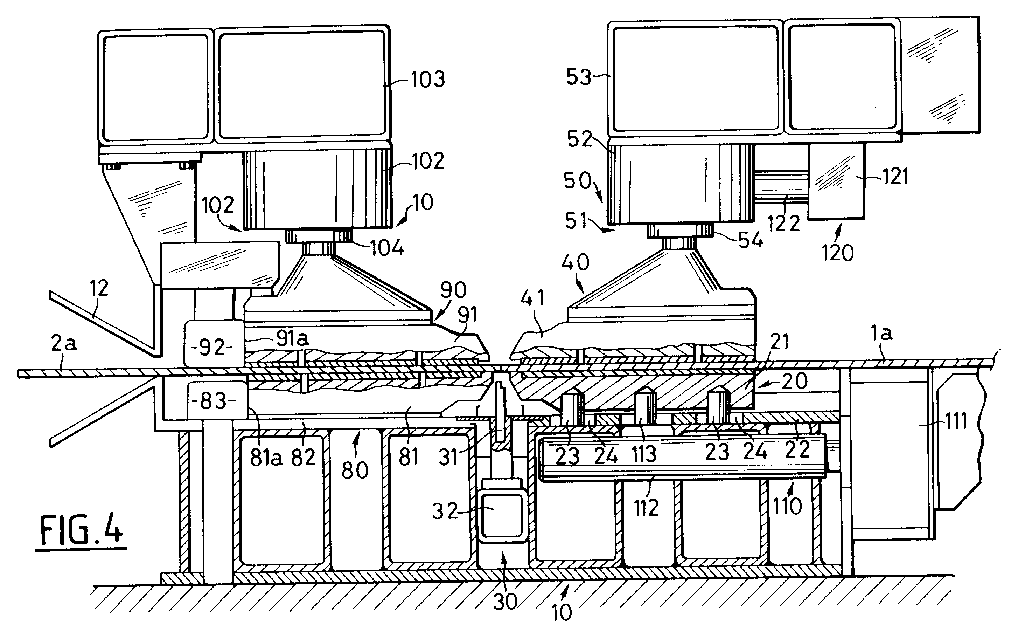

Dès que la tête 2a de la deuxième bobine 2 entre en contact avec la queue 1a de la première bobine 1, l'opérateur commande la descente du patin supérieur 91 (Figs. 4 et 7).

Les vérins 51 et 101 sont mis en pression et agissent sur les patins supérieurs, respectivement 41 et 91, de façon à serrer, d'une part, la queue 1a de la première bobine 1 entre le patin supérieur 41 et le patin inférieur 21 et, d'autre part, la tête 2a de la deuxième bobine entre le patin supérieur 91 et le patin inférieur 81 et à maintenir les bords à souder dans l'axe du faisceau laser 11.

La pression de serrage exercée par les patins supérieurs 41 et 91 est réglable et peut être déterminée en fonction des caractéristiques et/ou de l'épaisseur des bandes métalliques constituant les bobines 1 et 2.

Pour assurer un minimum de jeu entre les bords à souder, l'opérateur commande la mise en pression des vérins 111 et 121.

La tige 112 du vérin 111 agit par l'intermédiaire du pion 113, sur le patin inférieur 21 qui se déplace perpendiculairement au plan de joint des bords à souder et la tige 112 du vérin 121 agit, par l'intermédiaire du vérin 51, sur le patin supérieur 41 qui se déplace perpendiculairement au plan de joint des bords à souder.

Ainsi, le déplacement perpendiculairement au plan de joint des bords à souder du patin inférieur 21 et du patin supérieur 41 exerce sur les bords à souder une pression latérale.

Le déplacement latéral du patin inférieur 81 et du patin inférieur 91 est empêché par les galets, respectivement 83 et 92.

La pression latérale exercée par les vérins 111 et 121 est réglable et peut être déterminée en fonction des caractéristiques et/ou de l'épaisseur des bandes métalliques de façon à éviter un flambement de celle-ci et un recouvrement au niveau du plan de joint.

Ensuite, l'opérateur commande le déplacement de l'ensemble de soudage de telle manière que le faisceau laser 11 se déplace au-dessus du plan de joint et assure le soudage des bords à souder de la queue 1a de la première bobine 1 avec la tête 2a de la deuxième bobine 2.

Pendant le raboutage et le soudage des bords à souder, la portion de la bande de la première bobine 1 située en aval du système accumulateur 7 se déroule normalement et la longueur de la bande dans l'accumulateur diminue.

Après le soudage des bords à souder, l'opérateur commande la montée, d'une part, des poutres 53 et 103 ce qui a pour effet de soulever les patins supérieurs 41 et 91 et, d'autre part, des moyens 6a et 6b de guidage et de support des bandes métalliques de façon à éviter que ces bandes métalliques soient en contact avec les patins inférieurs 21 et 81 au cours du défilement de ces bandes.

Les avantages de l'invention selon la présente invention sont multiples.

En effet, l'installation selon l'invention permet de réaliser le raboutage et le soudage de deux bobines sans perturber les postes de traitement situés en aval de cette installation et d'éviter une cassure au niveau de la jonction entre les deux bobines raboutées, grâce au soudage des bords par un faisceau laser.

De plus, l'installation selon l'invention ne comporte qu'une seule cisaille simple destinée à couper successivement la queue de la première bobine et la tête de la deuxième bobine. Cette cisaille est disposée à l'extérieur de l'ensemble de positionnement et de maintien des bords à souder des deux bobines.

Une telle configuration est possible, car du fait de la pression latérale exercée sur les bords à souder pendant le soudage, il n'est pas nécessaire d'obtenir une découpe très précise des bords à souder et par conséquent d'utiliser des cisailles de grande précision. Ainsi, grâce à cette mise en pression latérale des bords à souder, le jeu entre lesdits bords à souder est réduit au moment du soudage.

Enfin, l'installation selon l'invention permet de réaliser une soudure de qualité parfaite tout en évitant des surépaisseurs au niveau de la zone soudée évitant ainsi un marquage de la bande au moment du bobinage de la bande.

## Revendications

1. Installation de raboutage et de soudage au moyen d'un faisceau laser (11) de deux bobines (12) de bandes métalliques pour former une bande métallique continue, du type comprenant :
- des moyens de déroulement (3) et d'enroulement (9) des bobines (1, 2),
- un système accumulateur (7) de la bande de la première bobine (1),
- des moyens (4) de détection de la queue (1a) de la première bobine (1) et de la tête (2a) de la deuxième bobine (2),
- des moyens (5) de cisaillage de la queue (1a) de la première bobine (1) et de la tête (2a) de la deuxième bobine (2),
- des moyens (6a, 6b) de guidage et de support des bandes métalliques des bobines (1, 2),
- un ensemble (10) de positionnement et de maintien des bords à souder de la queue (1a) de la première bobine (1) et de la tête (2a) de la deuxième bobine (2) les uns contre les autres et dans l'axe du faisceau laser (11), comportant
- des moyens (20) de positionnement de la queue (1a) de la première bobine (1) selon un plan de référence horizontal,
- des moyens (40) de maintien du bord à souder de la queue (1a) de la première bobine (1) dans l'axe du faisceau laser (11),
- des moyens (50) de serrage de la queue (1a) de la première bobine (1),
- des moyens (80) de positionnement de la tête (2a) de la seconde bobine (2) selon ledit plan horizontal,
- des moyens (90) de maintien du bord à souder de la tête (2a) de la seconde bobine (2) contre le bord à souder de la queue (1a) de la première bobine (1) et,
- des moyens (100) de serrage de la tête (2a) de la deuxième bobine (2)
- et un ensemble de soudage par faisceau laser déplaçable selon le plan de joint formé par les bords à souder desdites bobines (1, 2), caractérisée en ce que l'ensemble (10) de positionnement et de maintien des bords à souder comprend également :
- des moyens (30) de positionnement des bords à souder de la queue (1a) de la première bobine (1) dans l'axe du faisceau laser (11), - et des moyens (110, 120) de mise en pression latérale des bords à souder des bandes des deux bobines (1, 2).

2. Installation selon la revendication 1, caractérisée en ce que les moyens (5) de cisaillage sont formés par deux cisailles commandées par les moyens (4) de détection, la première cisaille étant disposée, par rapport au sens de défilement des bandes métalliques, en amont de l'ensemble (10) de positionnement et de maintien des bords à souder et destinée à couper la tête (2a) de la deuxième bobine (2) et la seconde cisaille étant disposée, par rapport au sens de défilement des bandes métalliques, en aval de l'ensemble (10) de positionnement et de maintien des bords à souder et destinée à couper la queue (1a) de la première bobine (1).

3. Installation selon la revendication 1, caractérisée en ce que les moyens de guidage et de support des bandes métalliques sont formés par au moins deux séries (6a, 6b) de rouleaux horizontaux déplaçables verticalement et comprenant chacune deux rouleaux inférieurs (60a, 62a et 60b, 62b) et un rouleau supérieur (61a et 61b), entre lesquels circulent les bandes métalliques, le rouleau supérieur (61a et 61b) de chaque série (6a et 6b) étant disposé entre les rouleaux inférieurs (60a, 62a et 60b, 62b).

4. Installation selon les revendications 1 et 3, caractérisée en ce qu'au moins une première série (6a) de rouleaux est disposée en amont de l'ensemble (10) de positionnement et de maintien des bords à souder par rapport au sens de défilement des bandes métalliques.

5. Installation selon les revendications 1 et 3, caractérisée en ce qu'au moins une seconde série (6b) de rouleaux est disposée en aval de l'ensemble (10) de positionnement et de maintien des bords à souder par rapport au sens de défilement des bandes métalliques.

6. Installation selon les revendications 4 et 5 ,caractérisée en ce que ladite seconde série (6b) de rouleaux est déplaçable horizontalement dans la direction opposée en sens de défilement des bandes métalliques.

7. Installation selon la revendication 1, caractérisée en ce que les moyens (20) de positonnement de la queue (1a) de la première bobine (1) sont formés par au moins un patin inférieur (21) s'étendant parallèlement au plan de joint des bords à souder, ledit patin inférieur (21) formant une surface de contact continu avec la face inférieure de la queue (1a) de la première bobine (1) et étant monté déplaçable sur une table support (22), perpendiculairement au plan de joint desdits bords à souder.

8. Installation selon les revendications 1 et 7, caractérisée en ce que les moyens (30) de positionnement du bord à souder de la queue (1a) de la première bobine (1) sont formés par une butée (31) longitudinale et escamotable, disposée verticalement pour que le plan passant par sa face latérale située en regard du patin inférieur (21), soit confondu avec l'axe du faisceau laser (11).

9. Installation selon les revendications 1 et 7, caractérisée en ce que les moyens (40) de maintien du bord à souder de la queue (1a) de la première bobine (1) dans l'axe du faisceau laser (11) sont formés par au moins un patin supérieur (41) déplaçable verticalement et s'étendant parallèlement au plan de joint des bords à souder, ledit patin supérieur (41) formant une surface de contact continu avec la face supérieure de la queue (1a) de la première bobine (1) et étant disposée en regard dudit patin inférieur (21).

10. Installation selon les revendications 1, 7 et 9, caractérisée en ce que les moyens (50) de serrage de la queue (1a) de la première bobine (1) sont formés par au moins un vérin (51) destiné à exercer sur le patin supérieur (41) une pression verticale pour serrer ladite queue (1a) de la première bobine (1) entre ce patin supérieur (41) et le patin inférieur (21).

11. Installation selon la revendication 9, caractérisée en ce que ledit vérin (51) comporte un corps (52) supporté par une poutre (53) s'étendant parallèlement au patin supérieur (41) et une tige (54) déplaçable verticalement et solidaire dudit patin supérieur (41).

12. Installation selon les revendications 9 à 11, caractérisée en ce que l'ensemble constitué par ledit patin supérieur (41), ledit vérin (51) et ladite poutre (53) est déplaçable verticalement.

13. Installation selon la revendication 1, caractérisée en ce que les moyens (80) de positionnement de la tête (2a) de la deuxième bobine (2) sont formés par au moins un patin inférieur (81) fixe, en appui sur une table support (82) et s'étendant parallèlement au plan de joint des bords à souder, ledit patin inférieur (81) formant une surface de contact continu avec la face inférieure de la tête (2a) de la deuxième bobine (2).

14. Installation selon la revendication 13, caractérisée en ce que le patin inférieur (81) est en appui par sa face latérale (81a) opposée à celle en regard du plan de joint à souder, sur au moins un organe de butée (83) solidaire de la table support (89).

15. Installation selon les revendications 1 et 13, caractérisée en ce que les moyens (90) de maintien du bord à souder de la tête (2a) de la deuxième bobine (2) contre le bord à souder de la queue (1a) de la première bobine (1) sont formés par au moins un patin supérieur (91) s'étendant parallèlement au plan de joint des bords à souder, ledit patin supérieur (91) formant une surface de contact continu avec la face supérieure de la tête (2a) de la deuxième bobine (2) et étant disposé en regard du patin inférieur (81).

16. Installation selon la revendication 15, caractérisée en ce que les moyens (100) de serrage de la tête (2a) de la deuxième bobine (2) sont formés par au moins un vérin (101) destiné à exercer sur le patin supérieur (91) une pression verticale pour serrer la tête (2a) de la deuxième bobine (2) entre ce patin supérieur (91) et le patin inférieur (81).

17. Installation selon la revendication 16, caractérisée en ce que ledit vérin (101) comporte un corps (102) supporté par une poutre (103) s'étendant parallèlement au patin supérieur (91) et une tige (104) déplaçable verticalement et solidaire dudit patin supérieur (91).

18. Installation selon les revendications 15 à 17, caractérisée en ce que l'ensemble constitué par ledit patin supérieur (91), ledit vérin (101) et ladite poutre (103) est déplaçable verticalement.

19. Installation selon les revendications 15 et 16, caractérisée en ce que le patin supérieur (91) est en appui par sa face latérale (91a) opposée à celle en regard du plan de joint des bords à souder, sur au moins un organe de butée (92) solidaire de ladite poutre (103).

20. Installation selon la revendication 1, caractérisée en ce que les moyens (110, 120) de mise en pression latérale des bords à souder des deux bobines (1, 2) sont formés, d'une part, par au moins un premier vérin (111) associé au patin inférieur (21) de positionnement de la queue (1a) de la première bobine (1) et, d'autre part, par au moins un second vérin (121) associé au patin supérieur (41) de maintien de la queue (1a) de ladite première bobine (1), lesdits vérins (111, 121) étant destinés à exercer, respectivement sur le patin inférieur (21) et sur le patin supérieur (41), une pression dirigée selon une direction perpendiculaire au plan de joint des bords à souder.

21. Installation selon la revendication 20, caractérisée en ce que les vérins (111, 121) sont commandés en synchronisation.

## Claims

1. Apparatus for butt-joining and welding two coils (1, 2) of metal strips by means of a laser beam (11) to produce a continuous metal strip, of the kind including:
- unwinding (3) and winding (9) means of the coils (1, 2),
- an accumulator system (7) of the strip of the first coil (1),
- detection means of the tail (1a) of the first coil (1) and of the head of the second coil (2),
- shearing means (5) of the tail (1a) of the first coil (1) and of the head (2a) of the second coil (2),
- guiding and supporting means (6a, 6b) of the metal strips of the coils (1, 2),
- a positioning and holding assembly (10) of the edges to be welded of the tail (1a) of the first coil (1) and the head (2a) of the second coil (2), one against the other, in the axis of the laser beam (11), comprising:
- positioning means (20) of the tail (1a) of the first coil (1) according to a horizontal reference plane,
- holding means (40) of the edge to be welded of the tail (1a) of the first coil (1) in the axis of the laser beam (11),
- securing means (50) of the tail (1a) of the first coil (1),
- securing means (80) of the head (2a) of the second coil (2) according to the said horizontal plane,
- holding means (90) of the edge to be welded of the head (2a) of the second coil (2) against the edge to be welded of the tail (1a) of the first coil (1), and,
- securing means (100) of the head (2a) of the second coil (2),
- a laser beam welding assembly displaceable according to the joint plane formed by the edges to be welded of the said coils (1, 2), characterised in that the positioning and holding assembly (10) of the edges to be welded also includes:
- positioning means (30) of the edges to be welded of of the tail (1a) of the first coil (1) in the axis of the laser beam (11),
- lateral pressurising means (110, 120) of the edges to be welded of the strips of the two coils (1, 2).

2. Apparatus according to claim 1, characterised in that the shearing means (5) are formed by two shears controlled by detection means (4), the first shear being disposed, relative to the sense of procession of the metal strips, up stream of the holding and positioning assembly (10) of the edges to be welded and destined to cut the head (2a) of the second coil (2) and the second shear being disposed, relative to the sense of procession of the metal strips, down stream of the positioning and holding assembly (10) of the edges to be welded and destined to cut the tail (1a) of the first coil (1).

3. Apparatus according to claim 1, characterised in that the guidance and support means of the metal strips are formed by at least two series (6a, 6b) of horizontal rollers vertically movable and each one including two lower rollers (60a 62a and 60b, 62b) and an upper roller (61a and 61b) between which the metal strips circulate, the upper roller (61a and 61b) of each series (6a and 6b) being disposed between the lower rollers (60a, 62a and 60b, 62b).

4. Apparatus according to claims 1 and 3 characterised in that at least one first series (6a) of rollers is disposed up stream of the positioning and holding assembly (10) of the edges to be welded in relation to the sense of procession of the metal strips.

5. Apparatus according to claims 1 and 3, characterised in that at least one second series (6b) of rollers is disposed down stream of the holding and positioning assembly (10) in relation to the sense of procession of the metal strips.

6. Apparatus according to claims 4 and 5, characterised in that the second series (6b) of rollers is movable horizontally in the direction opposed to the sense of procession of the metal strips.

7. Apparatus according to claim 1, characterised in that the positioning means (20) of the tail (1a) of the first coil (1) are formed by at least one lower block (21) extending parallel to the joint plane of the edges to be welded, the said lower block (21) forming a continuous contact surface with the lower face of the tail (1a) of the first coil (1) and being mounted displaceable on a support table (22), perpendicularly to the joint plane of the said edges to be welded.

8. Apparatus according to claims 1 and 7 characterised in that the positioning means (30) of the edge to be welded of the tail (1a) of the first coil (1) are formed by a longitudinal and retractable abutment (31) disposed vertically so that the plane passing through its lateral face situated facing the lower block (21) is merged with the axis of the laser beam (11).

9. Apparatus according to claims 1 and 7, characterised in that the holding means (40) of the edge to be welded of tail (1a) of the first coil (1) in the axis of the laser beam (11) are formed by at least one upper block (41) displaceable vertically and extending parallel to the joint plane of the edges to be welded, the said upper block (41) forming a continuous contact surface with the upper face of the tail (1a) of the first coil (1) and being disposed facing the said lower block (21).

10. Apparatus according to claims 1, 7 and 9, characterised in that the securing means (50) of the tail (1a) of the first coil (1) are formed by at least one jack (51) destined to apply on the upper block (41) a vertical pressure to secure the said tail (1a) of the first coil (1) between this upper block (41) and the lower block (21).

11. Apparatus according to claim 9, characterised in that the said jack (51) comprises a body (52) supported by a beam (53) extending parallel to the upper block (41) and a shaft (54) vertically displaceable and integral with the said upper block (41).

12. Apparatus according to claims 9 to 11, characterised in that the assembly made up of the said block (41), the said jack (51) and the said beam (53) is vertically displaceable.

13. Apparatus according to claim 1, characterised in that the positioning means (80) of the head (2a) of the second coil (2) are formed by at least one fixed lower block (81), supported on a support table (82) and extending parallel to the joint plane of the edges to be welded, the said lower block (81) forming a continuous contact surface with the lower face of the head (2a) of the second coil (2).

14. Apparatus according to claim 13 characterised in that the lower block (81) is supported by its lateral face (81a), opposite to the face facing the joint plane to be welded, on at least one abutment member (83) integral with the support table (89).

15. Apparatus according to claims 1 and 13, characterised in that the holding means (90) of the edge to be welded of the head (2a) of the second coil (2) against the edge to be welded of the tail (1a) of the first coil (1) are formed by at least one upper block (91) extending parallel to the joint plane of the edges to be welded, the said upper block (91) forming a continuous contact surface with the upper face of the head (1a) of the second coil (2) and being disposed facing the lower block (81).

16. Apparatus according to claim 15, characterised in that the securing means (100) of the head (2a) of the second coil (2) are formed by at least one jack (101) destined to apply on the upper block (91) a vertical pressure to secure the head (2a) of the second coil (2) between this upper block (91) and lower block (81).

17. Apparatus according to claim 16, characterised in that the said jack (101) comprises a body (102) supported by a beam (103) extending parallel to the upper block (91) and a shaft (104) displaceable vertically, and integral with, the said upper block (91).

18. Apparatus according to claims 15 to 17, characterised in that the assembly made up of by the said upper block (91), the said jack (101) and the said beam (103) is displaceable vertically.

19. Apparatus according to claims 15 and 16, characterised in that the upper base block (91) is supported by its lateral face (91a), opposite to the face facing the joint plane of the edges to be welded, on at least one abutment member (92) integral with the said beam (103).

20. Apparatus according to claim 1, characterised in that the means (110, 120) for applying lateral pressure to the edges to be welded of the two coils (1, 2) are formed, on one hand, by at least a first jack (111) associated with the lower block (21) of positioning of the tail (1a) of the first coil (1), and on the other, by at least a second jack (121) associated with the upper block (41) of the holding tail (1a) of the said first coil (1), the said jacks (111, 121) being destined to apply, respectively on the lower block (21) and on the upper block (41), a pressure directed in a direction perpendicular to the joint plane of the edges to be welded.

21. Apparatus according to claim 20, characterised in that the jacks (111, 121) are controlled in synchronisation.

## Patentansprüche

1. Anlage zum Aneinanderfügen und zum Schweißen von zwei aufgewickelten Metallbändern (1,2) mittels eines Laserstrahls (11), um ein kontinuierliches Metallband herzustellen, bestehend aus:
- Mitteln zum Abrollen (3) und Aufrollen (9) der Spulen (1,2),
- einer Stauvorrichtung (7) für das Band der ersten Spule (1),
- Mitteln (4) zum Abtasten des Endes (1a) der ersten Spule (1) und des Anfanges (2a) der zweiten Spule (2),
- Mitteln (5) zum Zerschneiden des Endes (1a) der ersten Spule (1) und des Anfanges (2a) der zweiten Spule (2),
- Mitteln (6a,6b) zum Führen und Tragen des metallischen Bandes der Spulen (1,2),
- einer Anordnung (10) zum Positionieren und Halten der Schweißränder des Endes (1a) der ersten Spule (1) und des Anfanges (2a) der zweiten Spule (2) derart, daß diese aneinander und in der Achse des Laserstrahls (11) liegen, bestehend aus Mitteln (20) zum Positionieren des Endes (1a) der ersten Spule (1) in bezug auf eine horizontale Referenzebene, Mitteln (40) zum Halten des Schweißrandes des Endes (1a) der ersten Spule (1) in der Achse des Laserstrahls (11), Mitteln (50) zum Festklemmen des Endes (1a) der ersten Spule (1), Mitteln (80) zum Positionieren des Anfanges (2a) der zweiten Spule (2) in bezug auf die horizontale Ebene, Mitteln (90) zum Halten des Schweißrandes des Anfanges (2a) der zweiten Spule (2) an dem Schweißrand des Endes (1a) der ersten Spule (1) und Mitteln (100) zum Festklemmen des Anfanges (2a) der zweiten Spule (2),
- und einer Vorrichtung zum Schweißen mittels eines Laserstrahls, die in bezug auf die Verbindungsebene, gebildet durch die Schweißränder der Spulen (1,2), verstellbar ist,
**gekennzeichnet durch** eine Vorrichtung (10) zum Positionieren und Halten der Schweißränder, bestehend außerdem aus Mitteln (30) zum Positionieren der Schweißränder des Endes (1a) der ersten Spule (1) in der Achse des Laserstrahls (11) und Mitteln (110,120) zum Ausüben eines seitlichen Druckes auf die Schweißränder der Bänder der beiden Spulen (1,2).

2. Anlage nach Anspruch 1, **dadurch gekennzeichnet**, daß die Mittel (5) zum Zerschneiden durch zwei Schneidwerkzeuge gebildet werden, die durch die Mittel (4) zum Abtasten gesteuert werden, daß das eine Schneidwerkzeug in bezug auf die Richtung des Abrollens des Metallbandes stromaufwärts von der Vorrichtung (10) zum Positionieren und Halten der Schweißränder angeordnet ist und bestimmt ist, den Anfang (2a) der zweiten Spule (2) zu beschneiden, und daß das zweite Schneidwerkzeug in bezug auf die Richtung des Abrollens des Metallbandes stromabwärts von der Vorrichtung (10) zum Positionieren und Halten der Schweißränder angeordnet ist und bestimmt ist, das Ende (1a) der ersten Spule (1) zu beschneiden.

3. Anlage nach Anspruch 1, **dadurch gekennzeichnet**, daß die Mittel zum Führen und Tragen des metallischen Bandes durch mindestens zwei Reihen (6a,6b) aus horizontalen Rollen gebildet werden, die vertikal verstellbar sind und von denen jede zwei untere Rollen (60a,62a und 60b,62b) und eine obere Rolle (61a und 61b) aufweist, zwischen denen die metallischen Bänder laufen, wobei die obere Rolle (61a und 61b) jeder Reihe (6a und 6b) zwischen den unteren Rollen (60a,62a und 60b,62b) angeordnet ist.

4. Anlage nach Anspruch 1 und 3, **dadurch gekennzeichnet**, daß mindestens eine erste Reihe (6a) von Rollen stromaufwärts von der Anordnung (10) zum Positionieren und Halten der Schweißränder in bezug auf das Ablaufen des Metallbandes angeordnet ist.

5. Anlage nach Anspruch 1 und 3, **dadurch gekennzeichnet**, daß mindestens eine zweite Reihe (6b) von Rollen stromabwärts von der Anordnung (10) zum Positionieren und Halten der Schweißränder in bezug auf das Ablaufen des metallischen Bandes angeordnet ist.

6. Anlage nach Anspruch 4 und 5, **dadurch gekennzeichnet**, daß die zweite Reihe (6b) der Rollen horizontal in entgegengesetzter Richtung zum Ablaufen des metallischen Bandes verstellbar ist.

7. Anlage nach Anspruch 1, **dadurch gekennzeichnet**, daß die Mittel (20) zum Positionieren des Endes (1a) der ersten Spule (1) durch mindestens einen unteren Schuh (21) gebildet werden, der sich parallel zur Verbindungsebene der Schweißränder erstreckt, eine Kontaktfläche bildet, die mit der unteren Fläche des Endes (1a) der ersten Spule (1) zusammenfällt, und auf einem Tragtisch (22) senkrecht zur Verbindungsebene der Schweißränder verstellbar montiert ist.

8. Anlage nach Anspruch 1 und 7, **dadurch gekennzeichnet**, daß die Mittel (30) zum Positionieren des Schweißrandes des Endes (1a) der ersten Spule (1) von einem länglichen und versenkbaren Anschlag (31) gebildet werden, der vertikal angeordnet ist, so daß die Ebene, die durch seine seitliche Fläche gegenüber dem unteren Schuh (21) gebildet wird, mit der Achse des Lasers (11) zusammenfällt.

9. Anlage nach Ansoruch 1 und 7, **dadurch gekennzeichnet**, daß die Mittel (40) zum Halten des Schweißrandes des Endes (1a) der ersten Spule (1) in der Achse des Laserstrahls (11) durch mindestens einen oberen Schuh (41) gebildet werden, der vertikal verstellbar ist, sich parallel zur Verbindungsebene der Schweißränder erstreckt, der eine durchgehende Kontaktfläche mit der oberen Fläche des Endes (1a) der ersten Spule (1) bildet und dem unteren Schuh (21) gegenüberliegt.

10. Anlage nach Anspruch 1, 7 und 9, **dadurch gekennzeichnet**, daß die Mittel (50) zum Festklemmen des Endes (1a) der ersten Spule (1) durch mindestens eine Schraubenwinde (51) gebildet werden, die auf den oberen Schuh (41) einen vertikalen Druck ausüben kann, um das Ende (1a) der ersten Spule (1) zwischen dem oberen Schuh (41) und dem unteren Schuh (21) einzuklemmen.

11. Anlage nach Anspruch 9, **dadurch gekennzeichnet**, daß die Schraubenwinde (51) einen Körper (52), der von einem Träger (53) getragen wird, der sich parallel zu dem oberen Schuh (41) erstreckt, und eine Stange (54) aufweist, die vertikal vestellbar ist und mit dem oberen Schuh (41) fest verbunden ist.

12. Anlage nach einem der Ansprüche 9 bis 11, **dadurch gekennzeichnet**, daß die Anordnung an dem oberen Schuh (41) der Schraubenwinde (51) und dem Träger (53) vertikal verstellbar ist.

13. Anlage nach Anspruch 1, **dadurch gekennzeichnet**, daß die Mittel (80) zum Positionieren des Anfanges (1a) der zweiten Spule (2) durch mindestens einen unteren festen Schuh (81) gebildet werden, der sich auf einem Tragtisch (82) abstützt, sich parallel zu der Verbindungsebene der Schweißränder erstreckt und eine Kontaktfläche bildet, die mit der unteren Fläche des Anfanges (2a) der zweiten Spule (2) zusammenfällt.

14. Anlage nach Anspruch 13, **dadurch gekennzeichnet**, daß sich der untere Schuh (81) mit seiner Seitenfläche (81a), die in bezug auf die Schweißverbindungsebene auf der anderen Seite liegt, an mindestens einem Anschlag (83) abstützen kann, der mit dem Tragtisch (89) fest verbunden ist.

15. Anlage nach Anspruch 1 und 13, **dadurch gekennzeichnet**, daß die Mittel (90) zum Halten des Schweißrandes des Anfanges (2a) der zweiten Spule (2) gegen den Schweißrand des Endes (1a) der ersten Spule (1) durch mindestens einen oberen Schuh (91) gebildet werden, der sich parallel zur Verbindungsebene der Schweißränder erstreckt, eine Kontaktfläche bildet, die mit der oberen Fläche des Anfanges (2a) der zweiten Spule (2) zusammenfällt, und der gegenüber dem unteren Schuh (81) angeordnet ist.

16. Anlage nach Anspruch 15, **dadurch gekennzeichnet**, daß die Mittel (100) zum Festklemmen des Anfanges (2a) der zweiten Spule (2) durch mindestens eine Schraubenwinde (101) gebildet werden, die auf den oberen Schuh (91) einen vertikalen Druck ausüben kann, um den Anfang (2a) der zweiten Spule (2) zwischen dem oberen Schuh (91) und dem unteren Schuh (81) einzuklemmen.

17. Anlage nach Anspruch 16, **dadurch gekennzeichnet**, daß die Schraubenwinde (101) einen Körper (102), der von einem Träger (103) getragen wird, welcher sich parallel zum oberen Schuh (91) erstreckt, und eine Stange (104) aufweist, die vertikal verstellbar ist und fest mit dem oberen Schuh (91) verbunden ist.

18. Anlage nach einem der Ansprüche 15 bis 17, **dadurch gekennzeichnet**, daß die Anordnung, gebildet durch den oberen Schuh (91), die Schraubenwinde und den Träger (103), vertikal verstellbar ist.

19. Anlage nach Anspruch 15 und 16, **dadurch gekennzeichnet**, daß sich der obere Schuh (91) mit seiner Seitenwand (91a), die auf der der Verbindungsebene der Schweißränder abgewandten Seite angeordnet ist, an mindestens einem Anschlag (92) abstützen kann, der mit dem Träger (103) fest verbunden ist.

20. Anlage nach Anspruch 1, **dadurch gekennzeichnet**, daß die Mittel (110,120), mit denen ein seitlicher Druck auf die Schweißränder der beiden Spulen (1,2) ausgeübt werden kann, einerseits aus mindestens einer ersten Schraubenwinde (111), die mit dem unteren Schuh (21) zum Positionieren des Endes (1a) der ersten Spule (1) verbunden ist, und andererseits aus mindestens einer zweiten Schraubenwinde (121), die mit dem oberen Schuh (41) zum Halten des Endes (1a) der ersten Spule (1) verbunden ist, besteht, daß die Schraubenwinden (111,121) auf den unteren Schuh (21) und den oberen Schuh (41) einen Druck ausüben können, der senkrecht zur Verbindungsebene der Schweißränder ist.

21. Anlage nach Anspruch 20, **dadurch gekennzeichnet**, daß die Schraubenwinden (111,121) synchron gesteuert werden.
